# EUROPEAN PATENT SPECIFICATION

(11) **EP 1 904 416 B1**
(45) Date of publication and mention of the grant of the patent: **27.02.2013**
(21) Application number: 05756717.4
(22) Date of filing: 30.06.2005
(51) Int. Cl.: C04B 26/06

(54) **COMPOSITION FOR ARTIFICIAL MARBLE HAVING NATURAL PATTERN**
ZUSAMMENSETZUNG FÜR KUNSTMARMOR MIT NATÜRLICHEM MUSTER
COMPOSITION POUR MARBRE ARTIFICIEL AYANT UN ASPECT NATUREL

(30) Priority: 30.05.2005 KR 20050045469
(43) Date of publication of application: 02.04.2008
(73) Proprietor: CHEIL INDUSTRIES INC., Gumi-si, Gyeongsangbuk-do 730-710 (KR)
(72) Inventor: PARK, Eung Seo, Yeosu-si, Jeollanam-do 555-803 (KR); CHOI, Sung Mook, Yeosu-si, Jeollanam-do 555-803 (KR); KIM, Dong Hee, Gumi-si, Gyeongsangbuk-do 730-710 (KR); JUEN, Jae Wook, Gwangjin-gu, Seoul 143-200 (KR)
(74) Representative: Bublak, Wolfgang
(86) International application number: PCT/KR2005/002057
(87) International publication number: WO 2006/129899

(56) References cited:
- DE-A1- 4 402 432
- JP-A- 10 045 815
- JP-A- 11 071 416
- JP-A- 2000 327 389
- JP-A- 2001 139 754
- KR-A- 2004 005 044
- US-A- 5 112 657
- DATABASE WPI Week 200235 Thomson Scientific, London, GB; AN 2002-310065 XP002621154, & JP 2001 335382 A (MRC DU PONT KK) 4 December 2001 (2001-12-04)
- DATABASE WPI Week 200351 Thomson Scientific, London, GB; AN 2003-535786 XP002621155, & JP 2002 362954 A (TAKAGI KOGYO KK) 18 December 2002 (2002-12-18)
- DATABASE WPI Week 200475 Thomson Scientific, London, GB; AN 2004-763240 XP002621156, & KR 2004 059 913 A (CHEIL IND INC) 6 July 2004 (2004-07-06)

## Description

### Field of the Invention

The present invention relates to a composition for artificial marble having patterns of natural marble appearance. More particularly, the present invention relates to a composition for artificial marble that can produce three-dimensional effect and unique stone-like texture by adding a pulverized sponge to an acrylic artificial marble composition.

### Background of the Invention

An artificial marble has been widely used as an interior building material in recent days. The artificial marbles are classified into two groups according to their base resin material. One is acrylic artificial marble, and the other is unsaturated polyester artificial marble. Recently, the acrylic artificial marble is widely used for its excellent appearance, high-class texture and good weatherability compared with the unsaturated polyester artificial marble.

For examples, the acrylic artificial marble is used as a material for kitchen counter top boards, wash bowls, dressing tables, bathtubs, various count tables, wall materials, interior articles, etc.

Artificial marbles having various patterns and designs have been heretofore developed. However, conventional artificial marbles, which employ only artificial marble chips, create dull appearance and could not create elegant look. Further, the use of artificial marble chips makes the resulting artificial marble products to be more expensive, and further the resulting artificial marble products become heavy, so that there are limitations in processing, transporting, and applications.

Patent document JP 2001 335 382 A discloses a lightweight artificial marble obtained by polymerisation curing a lightweight artificial marble composition consisting of 10-65 mass% of polymerisable components with its main component of methyl methacrylate, 30-85 mass% or an inorganic filler, and 0.1-10 mass% of an organic hollow filler.

Patent document DE 44 02 432 A1 discloses a granulated rock-like material having surfaces coated with a pigmented, mineral-filled coating based on silicate and/or acrylate, making it very suitable for the production of moulded products made of granite-like artificial polymer stone. Also disclosed are granulates and mouldings of polystyrene foam, with an optionally pigmented, mineral-filled surface coating as above, suitable for the production of lightweight mouldings of artificial stone or polymer concrete.

Accordingly, the present inventors have developed a composition for artificial marble providing a unique stone pattern by using a pulverized sponge so that the gauze or networked pore structures of pulverized sponge pieces expand or spread out by exothermic reaction during curing process.

### Objects of the Invention

An object of the present invention is to provide a composition for artificial marble having unique texture of natural stone using pulverized sponge pieces in the artificial marble.

Another object of the present invention is to provide a composition for artificial marble having three-dimensional pattern by forming shading around the gauze structure of the sponge with pigments therefor.

A further object of the present invention is to provide a composition for artificial marble that does not use conventional chip-processing step and reduces the costs of such processing.

A further object of the present invention is to provide a composition for artificial marble that decreases the weight of the product by employing sponge instead of conventional marble chips.

Other objects and advantages of this invention will be apparent from the following disclosure and appended claims.

### Summary of the Invention

A composition for artificial marble comprising:
(a) 100 parts by weight of an acrylic resin syrup;
(c) 100 to 300 parts by weight of an inorganic filler; and
(d) 01. to 10 parts by weight of a polymerization inhibitor;
characterised in that the composition further comprises
(b) 0.001 to 50 parts by weight of pulverised pieces of sponge made of polyester or polyamide, wherein the sponge is dyed with an inorganic pigment or dyestuff.

### Advantages of the Invention

Artificial marble compositions according to the present invention provide artificial marble with three-dimensional and unique natural stone-like textures by employing pulverized sponge having a good coloring property, and have advantages of low processing costs and light weight.

### Brief Description of the Drawings

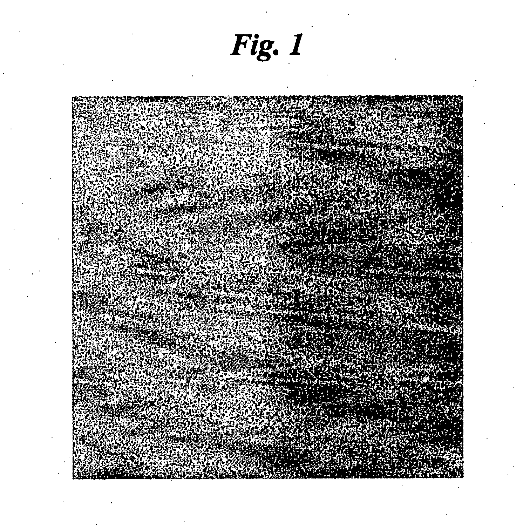

FIG. 1 is a photograph showing a surface pattern of conventional artificial marble having marble chips.
FIG. 2 is a photograph showing a surface pattern of artificial marble article obtained from Example 1.
FIG. 3 is a photograph showing a surface pattern of artificial marble article obtained from Example 2.

### Detailed Description of Embodiments of the Invention

### (a) Acrylic Resin Syrup

The acrylic resin syrup that can be used with the present invention is a mixture of acrylic monomer and its polymer, polyacrylate, dissolved therein.

Typical examples of the acrylic monomer include methacrylic acid, methyl methacrylate, ethyl methacrylate, isopropyl methacrylate, n-butyl methacrylate, and 2-ethylhexyl methacrylate, and so forth.

The polyacrylate can be homopolymer or copolymer of methyl methacrylate, ethyl methacrylate, isopropyl methacrylate, n-butyl methacrylate, 2-ethyl hexyl methacrylate, or the like. Among these, polymethylmethacrylate (PMMA) may be preferred.

In one embodiment, the acrylic monomer is equal to or more than 65 % by weight and the polyacrylate is equal to or less than 35 % by weight based on total acrylic resin syrup.

### (b) Pulverized sponge pieces

Sponge pieces are used to provide for unique qualities in the artificial marble representing elegant look and natural marble-like textures.

The sponge may be produced by expansion-molding either of polyester or polyamide resin, and is commercially available. The sponge is commonly used as a finishing material of the bottom or roof of a three-dimensional miniature building or a dish washing scrubber. The sponge can be readily prepared by a person of ordinary skill in the art. The sponge can be formed with the addition of a lubricant, a plasticizer, a stabilizer, a reinforcing agent, a flame retardant, or any other additives during expansion-molding in view with its desired uses.

Polyester and polyamide resins are conveniently adjusted for their particle sizes and colors because of their excellent stability against MMA resin. Accordingly, use of the pulverized sponge pieces made of polyester or polyamide may provide the resulting artificial marble with three-dimensional effects and unique qualities of elegance and natural stone-like textures.

Generally, sponge pieces have fine gauze or networked pore structures on a cross -section thereof. The pulverized sponge pieces added to the acrylic resin forms unique patterns as the gauze structures of sponge spreads out during an exothermic reaction or process.

The pulverized sponge pieces (b) are added to acrylic resin followed by exothermic process with the addition of a polymerization initiator. Then, the gauze structures spread out during the exothermic reaction of 120 to 150 °C to form unique structures and patterns like natural stone.

The sponge is dyed with an inorganic pigment or dyestuff.

The gauze or pore structures of the sponge are widened during exothermic reaction of 120 to 150°C, so that the pigment moves through the networked structures of the sponge. When curing following this exothermic process, the pigment is locked in the networked gauze structures or escapes from the gauze structures. Accordingly, the resulting products may have dot patterns outside the sponge pieces or three-dimensional effects in pattern due to shades formed around the sponge pieces or dot pattern, which looks as if a chip is formed inside another chip, generating natural stone-like appearance by making the colors look different between the inside and outside of the gauze or networked pore structures. Thus, artificial marbles according to the present invention generate three-dimensional and unique stone-like textures that have not been seen in the conventional artificial marbles.

The artificial marbles employing pulverized sponge pieces may not need a chip-processing step, so production cost may decrease significantly.

In the present invention, sponges having various kinds of gauze structures and different pore sizes can be used to provide unique stone-like patterns.

It is preferable that the sponge pieces have an average size of 0.01 to 30 mm. If the size is less than 0.01 mm, the artificial marble prepared therefrom might not obtain a unique pattern. If the size is larger than 30mm, there might be difficulties in the production.

Since the gauze or networked pore structures of sponge pieces expand or spread out during exothermal reaction, sponge pieces contained in the final product may be larger than the sponge pieces originally included in the artificial marble composition prior to the exothermal reaction..

In a composition for making the artificial marbles, the content of the pulverized sponge pieces is in the range from 0.001 to 50 parts by weight, per 100 parts by weight of acrylic resin syrup. If the content is less than 0.001 parts by weight, the artificial marble prepared therefrom might not provide a unique pattern. On the other hand, if the content is more than 50 parts by weight, there might be difficulties in the processing.

In some embodiments, conventional artificial marble chips with various colors having particle sizes from 0.1∼5 mm may be optionally added to provide artificial marbles with various patterns.

### (c) Inorganic Filler

As the inorganic filler, any inorganic materials well known in the art as fillers can be used. Typical examples of the inorganic filler include calcium carbonate, aluminum hydroxide, silica, alumina, barium sulfate, magnesium hydroxide, etc. Preferably, the inorganic filler to be used with the present invention may have a particle size of 1 to 100 µm.

Among them, aluminum hydroxide is most preferable as the artificial marbles obtained with use of aluminum hydroxide would have some transparent features and elegant appearance.

In a composition for making the artificial marbles, the content of the inorganic filler may be in the range from 100 to 300 parts by weight, preferably from 120 to 190 parts by weight, per 100 parts by weight of acrylic resin syrup.

### (d) Polymerization Initiator

Examples of the polymerization initiator include peroxides such as benzoyl peroxide, lauroyl peroxide, butyl hydroperoxide, cumyl hydroperoxide etc., and azo compounds such as azobisisobutylonitrile and the like.

In a composition for making the artificial marbles, the content of the polymerization initiator may be in the range from 0.1 to 10 parts by weight, per 100 parts by weight of acrylic resin syrup.

The artificial marbles according to the present invention can be prepared using known processes. For example, all the components are mixed together to obtain a slurry or composition for the artificial marble. Then the slurry is poured into a molding cell, followed by curing to form artificial marble product.

The invention may be better understood by reference to the following examples which are intended for the purpose of illustration and are not to be construed as in any way limiting the scope of the present invention, which is defined in the claims appended hereto. In the following examples, all parts and percentage are by weight unless otherwise indicated.

### EXAMPLES

### Example 1

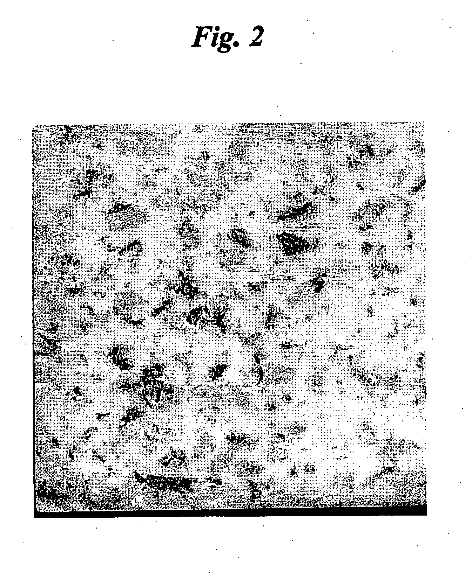

100 parts by weight of methyl methacrylate resin syrup consisting of a mixture of 30 % ofpolymethyl methacrylate and 70 % of methylmethacrylate, 1 part by weight of pulverized pieces of polyamide sponge, 190 parts by weight of aluminum hydroxide, and 2 parts by weight of lauroyl peroxide were mixed to obtain a slurry mixture for artificial marble. The polyamide sponge (available from KUKJE Industrial Co., Ltd in Korea) was dyed in blue color, and the pulverized pieces were passed through a sieve with 10 meshes (1.9mm). The slurry mixture was poured into a molding cell and cured to obtain a solid surface article in the form of a flat plate. The resulting article had a unique texture, which is shown in the photograph of Figure 2.

### Example 2

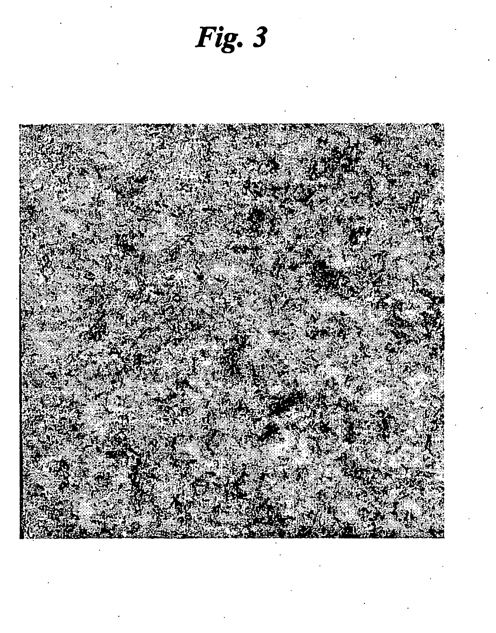

100 parts by weight of methyl methacrylate resin syrup consisting of a mixture of 30 % of polymethyl methacrylate and 70 % of methylmethacrylate, 0.5 parts by weight of pulverized pieces of polyamide sponge dyed in blue, 0.5 parts by weight of pulverized pieces of polyester sponge dyed in green, 190 parts by weight of aluminum hydroxide, and 2 parts by weight of lauroyl peroxide were mixed to obtain a slurry mixture for artificial marble. The polyamide and polyester sponges were available from KUKJE Industrial Co., Ltd in Korea, and the pulverized pieces of the blue and green sponges were passed through a sieve with 10 meshes (1.9mm). The slurry mixture was poured into a molding cell and cured to obtain a solid surface article in the form of a flat plate. The resulting article had a unique texture, which is shown in the photograph of Figure 3.

The present invention can be easily carried out by an ordinary skilled person in the art.

## Claims

1. A composition for artificial marble comprising:
(a) 100 parts by weight of an acrylic resin syrup;
(c) 100 to 300 parts by weight of an inorganic filler; and
(d) 0.1 to 10 parts by weight of a polymerization initiator;
**characterised in that** the composition further comprises
(b) 0.001 to 50 parts by weight of pulverized pieces of sponge made of polyester or polyamide, wherein the sponge is dyed with an inorganic pigment or dyestuff.

2. The composition of Claim 1, wherein said acrylic resin syrup (a) is a mixture of acrylic monomer and polyacrylate dissolved therein, wherein the acrylic monomer is selected from the group consisting of methacrylic acid, methyl methacrylate, ethyl methacrylate, isopropyl methacrylate, n-butyl methacrylate, and 2-ethylhexyl methacrylate, and wherein the acrylic monomer is equal to or more than 65% by weight and the polyacrylate is equal to or less than 35% by weight

3. The composition of Claim 1, wherein said pulverized pieces of the sponge (b) have a size from 0.01 mm to 30 mm.

4. The composition of Claim 1, wherein said inorganic filler (c) is selected from the group consisting of calcium carbonate, aluminum hydroxide, silica, alumina, barium sulfate and magnesium hydroxide.

5. The composition of Claim 1, further comprising marble chips (f) having a particle size from 0.1 mm to 5 mm.

6. The composition of Claim 1, wherein a gauze structure of the pulverized pieces of sponge spreads out by an exothermic curing process.

7. An artificial marble produced from the composition as defined in any one of Claims 1-6.

## Patentansprüche

1. Zusammensetzung für Kunstmarmor, umfassend
(a) 100 Gewichtsteile eines Acrylharzsirups;
(c) 100 bis 300 Gewichtsteile eines anorganischen Füllstoffs; und
(d) 0,1 bis 10 Gewichtsteile eines Polymerisationsinitiators;
**dadurch gekennzeichnet, dass** die Zusammensetzung des Weiteren umfasst:
(b) 0,001 bis 50 Gewichtsteile pulverisierte aus Polyester oder Polyamid hergestellte Schwammstücke, wobei der Schwamm mit einem anorganischen Pigment oder Farbstoff gefärbt ist.

2. Zusammensetzung nach Anspruch 1, wobei der Acrylharzsirup (a) ein Gemisch aus Acrylmonomer und darin gelöstem Polyacrylat ist, wobei das Acrylmonomer ausgewählt ist aus der Gruppe, bestehend aus Methacrylsäure, Methylmethacrylat, Ethylmethacrylat, Isopropylmethacrylat, n-Butylmethacrylat und 2-Ethylhexylmethacrylat, und wobei das Acrylmonomer gleich oder mehr als 65 Gew.-% ausmacht und das Polyacrylat gleich oder weniger als 35 Gew.-% ausmacht.

3. Zusammensetzung nach Anspruch 1, wobei die pulverisierten Schwammstücke (b) eine Größe von 0,01 mm bis 30 mm aufweisen.

4. Zusammensetzung nach Anspruch 1, wobei der anorganische Füllstoff (c) ausgewählt ist aus der Gruppe, bestehend aus Calciumcarbonat, Aluminiumhydroxid, Silica, Aluminiumoxid, Bariumsulfat und Magnesiumhüdroxid.

5. Zusammensetzung nach Anspruch 1, des Weiteren umfassend Marmorchips (f) mit einer Teilchengröße von 0,1 mm bis 5 mm.

6. Zusammensetzung nach Anspruch 1, wobei sich eine Gazestruktur aus den pulverisierten Schwammstücken durch ein exothermes Aushärtungsverfahren ausbreitet.

7. Kunstmarmor, der aus der wie in einem der Ansprüche 1 bis 6 definierten Zusammensetzung hergestellt ist.

## Revendications

1. Composition pour marbre artificiel comprenant :
(a) 100 parties en poids d'un sirop de résine acrylique ;
(c) 100 à 300 parties en poids d'une charge inorganique ; et
(d) 0,1 à 10 parties en poids d'un initiateur de polymérisation ;
**caractérisée en ce que** la composition comprend en outre
(b) 0,001 à 50 parties en poids de pièces pulvérisées d'éponge constituées de poly(ester) ou de poly(amide), où l'éponge est teintée avec un pigment inorganique ou une teinture.

2. Composition selon la revendication 1, dans laquelle ledit sirop de résine acrylique (a) est un mélange de monomère acrylique et de poly(acrylate) dissous dedans, dans laquelle le monomère acrylique est choisi dans le groupe consistant en l'acide méthacrylique, le méthacrylate de méthyle, le méthacrylate d'éthyle, le méthacrylate d'isopropyle, le méthacrylate de n-butyle et le méthacrylate de 2-éthylhexyle, et dans laquelle le monomère acrylique est supérieur ou égal à 65 % en poids et le poly(acrylate) est inférieur ou égal à 35 % en poids.

3. Composition selon la revendication 1, dans laquelle lesdites pièces pulvérisées de l'éponge (b) ont une taille de 0,01 mm à 30 mm.

4. Composition selon la revendication 1, dans laquelle ladite charge inorganique (c) est choisie dans le groupe consistant en le carbonate de calcium, l'hydroxyde d'aluminium, la silice, l'alumine, le sulfate de baryum et l'hydroxyde de magnésium.

5. Composition selon la revendication 1, comprenant en outre des écailles de marbre (f) ayant une taille de particules de 0,1 mm à 5 mm.

6. Composition selon la revendication 1, dans laquelle une structure de gaze des pièces pulvérisées d'éponge se disperse par un procédé de durcissement exothermique.

7. Marbre artificiel produit à partir de la composition telle que définie dans l'une quelconque des revendications 1 à 6.
